# EUROPÄISCHE PATENTSCHRIFT

(11) **EP 1 920 213 B1**
(45) Veröffentlichungstag und Bekanntmachung des Hinweises auf die Patenterteilung: **14.12.2011**
(21) Anmeldenummer: 06778396.9
(22) Anmeldetag: 30.08.2006
(51) Int. Cl.: G01B 11/24, G01N 21/958, A61F 2/06

(54) **AUTOMATISCHE INSPEKTIONSVORRICHTUNG FÜR STENTS UND VERFAHREN ZUR AUTOMATISCHEN INSPEKTION**
AUTOMATIC INSPECTION DEVICE FOR STENTS, AND METHOD OF AUTOMATIC INSPECTION
DISPOSITIF DE CONTROLE AUTOMATIQUE POUR ENDOPROTHESES VASCULAIRES ET PROCEDE DE CONTROLE AUTOMATIQUE

(30) Priorität: 01.09.2005 DE 202005013876 U
(43) Veröffentlichungstag der Anmeldung: 14.05.2008
(73) Patentinhaber: IMSTec GmbH, 55131 Mainz (DE)
(72) Erfinder: MAEHRINGER-KUNZ, Edgar, 55424 Münster-Sarmsheim (DE); LOEFFLER, Matthias, 67304 Eisenberg (DE); RODE, Reinhard, 74081 Heilbronn (DE); SCHNEIDER, Tanja, 65439 Flörsheim (DE); JARSCHEL, Gerald, 63329 Egelsbach (DE); EGGELBUSCH, Kathrin, 64521 Groß-Gerau (DE)
(74) Vertreter: Rach, Werner
(86) Internationale Anmeldenummer: PCT/EP2006/065814
(87) Internationale Veröffentlichungsnummer: WO 2007/025986

(56) Entgegenhaltungen:
- EP-A2- 0 249 799
- EP-A2- 0 660 098
- DE-A1- 4 128 856
- DE-A1- 10 356 765
- JP-A- 2001 070 455
- JP-A- 2001 074 433
- US-A1- 2003 192 914
- US-B1- 6 618 136
- US-B2- 6 606 403

## Beschreibung

### Gebiet der Erfindung

Die vorliegende Erfindung betrifft allgemein eine Vorrichtung zur automatischen Beleuchtung und Inspektion von röhrenförmigen Proben, wie zum Beispiel kardiovaskuläre Stents und andere präzisionsgeschnittene Röhrchen und Komponenten.

### Hintergrund der Erfindung, Stand der Technik

Stents sind feine, zylinderförmige Drahtgeflechte, welche bei Ablagerungen in die Arterie eingeführt und an der verengten Stelle mit Hilfe eines Ballonkatheters expandiert werden. Nach der Entfernung des Katheters dient der Stent als Gefäßstütze, um die Arterie offen zu halten. Je nach Befund und Einsatzgebiet existieren verschiedene Stentdesigns, -größen und Materialien einschließlich Beschichtungen.

Kardiovaskuläre Stents müssen hohen Anforderungen genügen, um einwandfrei arbeiten zu können. Falls der Stent rauhe oder scharfe Kanten aufweist, kann er Blutzellen oder Blutgefäße beschädigen, in die er eingesetzt wird. Dies kann zu einer weiteren Ruptur der atherösklerotischen Plaque, Embolien und Blutgerinnseln und so zu potentiell lebensgefährdenden Situationen führen.

Die vorliegende Erfindung betrifft eine Beleuchtungs- und Inspektionsvorrichtung für Stents und andere ähnliche Teile, die die Form eines kleinen, präzisionsbearbeiteten Röhrchens aufweisen.

Üblicherweise werden Laser verwendet, um Stents zu schneiden oder zu schweißen. Dieses Verfahren kann, obwohl es hochpräzise ist, gelegentlich zu defekten Teilen führen. Stents sind ziemlich klein und weisen Durchmesser von ungefähr 1 mm auf. Nach der Bearbeitung beträgt die Größe der individuell ausgeschnittenen Strukturen zwischen 50 und 200 µm. Dementsprechend können kleine Änderungen bei den Prozessparametern, wie zum Beispiel Laserleistung, Röhrchendurchmesser etc., Defekte verursachen. Solche Defekte können beispielsweise außerhalb der Toleranzgrenzen liegende oder missgebildete Strukturen hervorrufen.

Da Stents im Herzen oder in anderen kritischen Gebieten des Blutflusses verwendet werden, kann eine Fehlfunktion des Stents lebensbedrohlich sein. Daher umfasst die Herstellung der Stents typischerweise Inspektionsmaßnahmen. Normalerweise untersucht eine menschliche Bedienungsperson die Stents mit Hilfe eines Stereomikroskops auf sichtbare Defekte. Der zylinderförmige Stent wird dabei mit Hilfe einer entsprechenden mechanischen Vorrichtung gedreht und die Bedienungsperson inspiziert abschnittsweise sowohl die Innenals auch die Außenseite des Stents. Typische Defekte sind z.B. Abweichungen der Stentstrukturen von den Sollmaßen sowie Oberflächendefekte jeder Art wie z.B. Kontamination, Kratzer, Spitzen usw., welche für eine sichere Funktion des Stents absolut kritisch sind. Eine mehrdimensionale Inspektion wird typischerweise durch eine menschliche Bedienungsperson mittels einer Profilprojektionsvorrichtung durchgeführt. Alternativ kann diese Untersuchung auch automatisch mit Hilfe eines Bildverarbeitungssystems durchgeführt werden.

Die Probleme, die mit manuellen bzw. automatischen Inspektionsansätzen verbunden sind, sind vielfältig. Zum einen machen menschliche Fehler die visuelle Inspektion von Produkten weniger effektiv. Zum anderen ist eine manuelle Inspektion relativ langsam und auf diese Weise ein relativ kostspieliger Aspekt des Herstellungsprozesses. Des weiteren liefert eine bei der manuellen Inspektion typischerweise verwendete Profilprojektionsvorrichtung im Allgemeinen keine numerischen dimensionalen Daten, die u.U. für eine Prozesskontrolle wichtig sein könnten. Zudem werden, wenn die äußere und innere Oberfläche des Stents untersucht werden, typischerweise beide Oberflächen gleichzeitig beleuchtet, was zu Reflexen führt, die eine automatische Inspektion verhindern.

In der JP-A-2001066521 wird ein Verfahren und eine Vorrichtung zur Inspektion der Innenseite eines (beschichteten) Stents beschrieben, wobei der Stent auf einen sogenannten "fiber scope" aufgeschoben wird. Die Inspektion erfolgt visuell durch einen Beobachter, ist also nicht automatisiert. Die Beleuchtung des Stents erfolgt durch eine nichtquelle die licht in das "fiber scope" einkoppelt.

Die JP-A-2001070455 offenbart ein Verfahren und eine Vorrichtung zur Inspektion der Weite eines Musters auf der Stentoberfläche. Hierbei wird das aufgenommene Bild des Stents mit eingegebenen Referenzdaten verglichen. Die Beleuchtung des Stents erfolgt durch eine an der Kamera angebrachte Lichtquelle.

JP-A-2001074433 beschreibt ein Verfahren und eine Vorrichtung zur Inspektion der äußeren Oberfläche eines Stents, ähnlich der JP-A-2001070455. Eine Beleuchtung des Stents während der Inspektion erfolgt durch eine flächige Durchlichtquelle

Die US 6,606,403 B2 schließlich offenbart ein automatisches System zur Beleuchtung, Inspektion und Vermessung von Stents und anderer präzisionsgeschnittener Röhrchen und Komponenten, das aus einer elektronischen Zeilenkamera mit einer Linse, einer Lichtquelle zur Bereitstellung der notwendigen Beleuchtung, einer Spindel, auf die das Röhrchen während der Inspektion aufgespannt wird, einem drehbaren Gestell zur Drehung der Spindel und einem computerbasierten elektronischen Bilderkennungssystem besteht, das ein zeilenweises Bild des Stents liefert, wenn er sich unter der Kamera dreht. Dieses System ist jedoch lediglich in der Lage, die äußere Oberfläche des Stents zu inspizieren.

DE 41 28 856 A1 schließlich offenbart ein Verfahren und eine Vorrichtung zur Inspektion einer röhrenförmigen Probe, die auf einem Drehteller gehaltert ist. Die Beleuchtung erfolgt durch eine kombinierte Durchlicht Dunkelfeld-Beleuchtung.

### Zusammenfassung der Erfindung

Es ist daher die Aufgabe der vorliegenden Erfindung, eine Vorrichtung bereit zu stellen, die eine schnelle automatische Inspektion von röhrenförmigen Proben, insbesondere Stents, erlauben. Bei der Vermessung von Stents sollen Stent-Innen- und -außenflächen in Bezug auf Kontur- und Oberflächenfehler inspiziert werden.

Es ist eine weitere Aufgabe der vorliegenden Erfindung, eine Beleuchtung der zu untersuchenden Objektoberflächen bereit zu stellen, die es gestattet, die automatische Inspektion exakt durchführen zu können.

Diese und weitere Aufgaben werden durch die Vorrichtung gemäß Anspruch 1 und das Verfahren gemäß Anspruch 31 gelöst. Weitere vorteilhafte Ausgestaltungen sind in den abhängigen Ansprüchen dargelegt.

### Kurze Beschreibung der Zeichnungen

Die Erfindung wird im folgenden anhand der Zeichnungen näher erläutert. Darin zeigt
- Fig. 1: schematisch den Aufbau der erfindungsgemäßen Vorrichtung;
- Fig. 2: schematisch das Prinzip der erfindungsgemäßen Vorrichtung;
- Fig. 3: schematisch die Halterung der zu untersuchenden Probe;
- Fig. 4: schematisch die Verwendung einer Mehrzahl von erfindungsgemäßen Vorrichtungen; und
- Fign. 5A und 5B: schematisch die Verwendung einer Matrix-Kamera in der erfindungsgemäßen Vorrichtung.

### Detaillierte Beschreibung eines Ausführungsbeispiels

Im Folgenden wird die Erfindung im Zusammenhang mit den beigefügten Zeichnungen am Beispiel der Inspektion eines Stents näher erläutert. Es ist dem Fachmann klar, dass die erfindungsgemäße Vorrichtung nicht auf die Beleuchtung und Inspektion von Stents beschränkt, sondern für eine Vielzahl von röhrenförmigen Objekten nutzbar ist. Es ist für den Fachmann weiterhin erkennbar, dass mittels der erfindungsgemäßen Vorrichtung sowohl unbeschichtete als auch beschichtete Proben inspiziert werden können.

Wie bereits weiter oben angemerkt, werden kardiovaskuläre Stents permanent in ein Blutgefäß eingeführt, um als Gerüst zu dienen, das eine verstopfte Arterie offen halten kann. Im Gebrauch werden Stents mittels eines Katheters in die Arterie eingebracht und typischerweise durch Aufblasen eines sehr kleinen Ballons am Ende des Katheters, auf den der Stent montiert ist, entfaltet.

Bei der Herstellung solcher Stents müssen diese sorgfältig auf etwaige Defekte kontrolliert werden. Während dieser Inspektion müssen sowohl die innere als auch die äußere Oberfläche des Stents untersucht werden. Es ist jedoch ein grundlegendes Problem, eine Beleuchtungsmethode zu finden, die es gestattet, selektiv entweder die äußere oder die innere Oberfläche innerhalb eines begrenzten Bereichs zu beleuchten. Sobald beide Seiten gleichzeitig beleuchtet werden, kommt es zu Streureflexionen, die eine exakte automatische Inspektion verhindern.

Wenn heutzutage röhrenförmige Proben, wie z.B. kardiovaskuläre Stents, untersucht werden, werden diese auf zwei drehbaren Führungsrollen platziert. Auf diese Weise kann der Stent in jede Position gebracht und von allen Seiten untersucht werden. Die Inspektion wird mittels einer Beleuchtung von außen durchgeführt, d.h., die äußere und die innere Oberfläche werden gleichzeitig beleuchtet. Demzufolge werden äußere und innere Oberfläche des Stents nacheinander scharfgestellt und der Stent inspiziert. Aufgrund der gleichzeitigen Beleuchtung beider Oberflächen treten Abbildungen mit sehr intensiven Streureflexionen auf. Dies erschwert jedoch eine reproduzierbare manuelle Inspektion und verhindert gleichzeitig eine automatische Inspektion unter Verwendung von Bildverarbeitungsalgorithmen.

Bei der vorliegenden Erfindung erfolgt die Beleuchtung der Objektoberflächen mittels einer Kombination von Dunkelfeldbeleuchtung und Durchlichtbeleuchtung. Bei der Dunkelfeldbeleuchtung, die bspw. durch die Beleuchtung mit einem Ringlicht bewerkstelligt werden kann, gelangt das direkte Licht ohne Objekt nicht in das Objektiv. Erst durch das Vorhandensein eines strukturierten Objekts mit Kanten wird das Licht gestreut und somit auf dunklem Hintergrund sichtbar. Zur stärkeren Kontrastierung der Abbildung der Stentkontur dient eine der Kamera 10 gegenüberliegende Durchlichteinheit 16, welche den Stent 4 als dunkles Objekt vor einem hellen Hintergrund abbildet und somit optimale Segmentierungsmöglichkeiten bietet. Voraussetzung für eine optimale Segmentierung in der Bildverarbeitung ist ein möglichst hoher Kontrast zwischen interessierendem Bereich und der Umgebung. Der Einsatz des Durchlichts 16 führt zu einem optimalen Kontrast, da hier nur die abschattende Wirkung der zu untersuchenden Stentstrukturen ausschlaggebend ist. Die Durchlichtbeleuchtung kann bspw. mit einer Leuchtplatte realisiert werden, es sind aber auch andere Möglichkeiten denkbar wie z.B. ein Lichtwellenleiter mit vorgesetzter Optik, ein Ringlicht, etc.

Weiterhin dient eine zusätzliche Auflichtbeleuchtung (z.B. Ringlicht, koaxiale Beleuchtung, etc.) zur optischen Hervorhebung (Kontrastierung) von solchen Oberflächendefekten, welche keine ausgeprägte Kantenstruktur aufweisen.

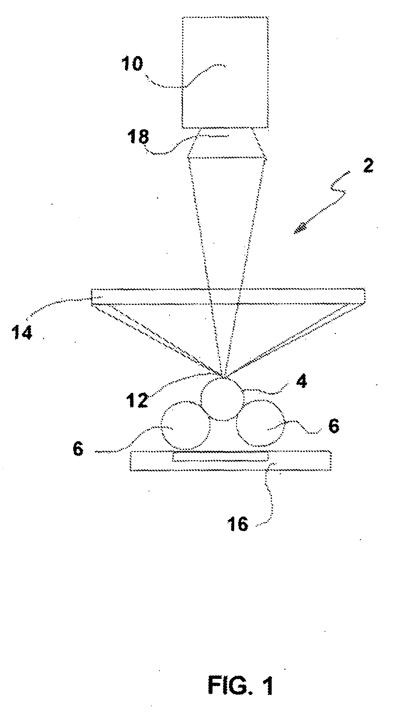

Figur 1 zeigt schematisch den Aufbau der erfindungsgemäßen Vorrichtung 2.

Um Fehler in der optischen Abbildung der Stentoberfläche zu vermeiden, wird der Stent 4 mit Hilfe einer aus zwei parallelen Walzen 6 bestehenden Drehvorrichtung vor einer Kamera 10 mit entsprechender Optik "abgewickelt". Bei der Kamera kann es sich z.B. um eine Zeilenkamera, eine CCD-Kamera, eine Matrix-Kamera oder dgl. handeln. Die Optik ist dabei so ausgelegt, dass sie die Variationen der Stentoberflächen (Formabweichung) toleriert bzw. diese durch ein Autofokussystem nachgeführt wird. Des weiteren ist insbesondere bei der Inspektion der Stentinnenfläche die Stentaußenfläche soweit wie nötig aus dem Fokusbereich gelegen. Normalerweise ist bei der Inspektion stets der Scheitelpunkt 12 des Stents 4 im Fokus der Abbildung, sowohl bei Abbildung der Innen- als auch der Außenseite.

Während in der oben geschilderten Ausführungsform die drehbaren Mittel 6 aus zwei parallelen Walzen bestehen, kann der Stent in einer weiteren vorteilhaften Ausgestaltung der Erfindung auch schlupffrei unter der Kameraanordnung gedreht werden, indem er an den Stirnseiten von innen oder von außen gegriffen und dann gedreht wird. Dies kann z.B. durch einen auf den Stirnseiten des Stents angeordneten Konus erreicht werden, an dem 3 Pins in einem Winkel von 120° zueinander angeordnete sind. Die Pins greifen dann den Stent an den Stirnseiten und drehen ihn. In einer weiteren vorteilhaften Ausgestaltung erfolgt das Kontaktieren beim Greifen an den Stirnseiten diskontinuierlich, z.B. durch einen Konus mit n x 3 Pins unter einem Winkel 120°/n. Der Begriff "diskontinuierlich" bedeutet hierbei, dass die Kontaktstelle zwischen der Greifvorrichtung an den Stirnseiten des Stents und dem Stent selbst während der Rotation nicht immer dieselbe ist, sondern gezielt variiert wird. Somit befinden sich also die Kontaktstellen nicht immer am gleichen Ort an den Stirnseiten auf dem bzw. innerhalb des Stents, so dass die gesamte Stentoberfläche zu einer gegebenen Zeit für die Inspektion frei zur Verfügung steht, ohne dass durch die Kontaktierung ein Teil des Stents verdeckt ist und dadurch nicht inspiziert werden kann.

In einem weiteren Anwendungsfall werden die Seitenflächen (Schnittkanten, Schnittflächen, Schweißkanten- und flächen) des Stents 4 zusätzlich inspiziert. Hierzu kann die zuvor beschriebene optische Anordnung relativ zu den inspizierenden Flächen positioniert werden.

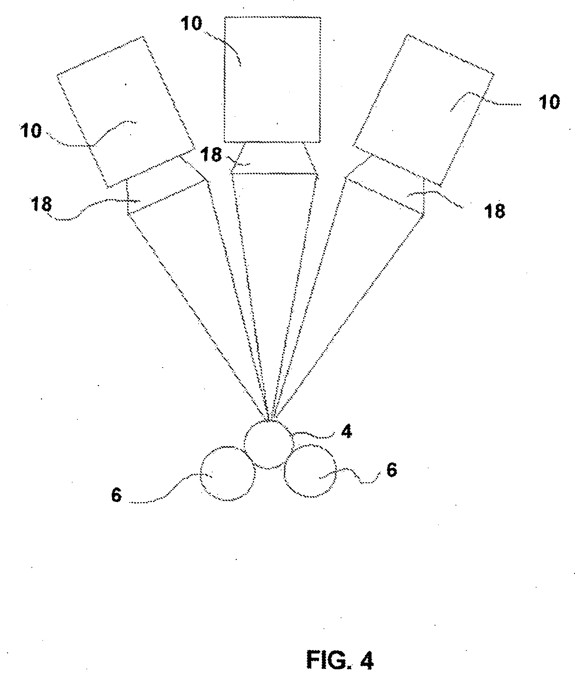

In einer erweiterten Ausführungsform der erfindungsgemäßen Vorrichtung werden parallel eine Reihe dieser optischen Anordnungen zur Inspektion verwendet (vgl. Fig. 4).

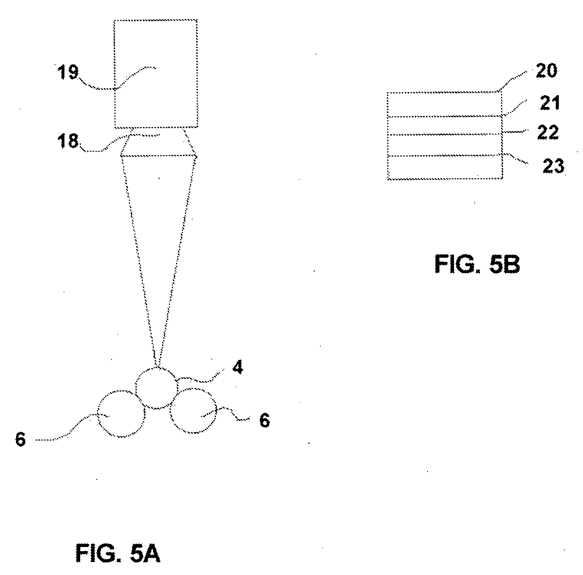

In einer weiteren vorteilhaften Ausführung der erfindungsgemäßen Vorrichtung wird zur Detektion der zu untersuchenden Oberflächen eine Matrix-Kamera 19 verwendet (vgl. Fig. 5A). Hierbei wird für jeden der gesuchten Bereiche (Oberfläche, Kanten etc.) partiell eine Zeile der Matrix-Kamera 19 ausgelesen (20 bis 23 in Fig. 5B). In der Abwicklung ergibt sich somit für jeden Teilbereich des Stents ein komplettes Bild.

Die Beleuchtung der Objektoberflächen erfolgt bspw. mit Hilfe eines Ringlichtes 14, dessen Abstand und Abstrahlcharakteristik für ein sog. Dunkelfeld sorgt. Somit treten die Kanten der bei der Laserbearbeitung erzeugten Stentstege als helle Linien in dem aufgenommenen Bild hervor. Auch mögliche Defekte wie z.B. Kratzer, Erhebungen etc. auf den ansonsten glatten Stegoberflächen erzeugen in der optischen Abbildung helle Reflexionen vor dunklem Hintergrund. Sowohl die Stentkonturen als auch die Oberflächendefekte werden anschließend mittels Bildverarbeitungsalgorithmen automatisch erkannt und ausgewertet. Die Dunkelfeldbeleuchtung ist auch aufgrund der hochreflektierenden bzw. spiegelnden Stentoberfläche (resultierend aus dem bei der Herstellung angewandten Elektropolierprozess) sinnvoll. Selbstverständlich sind auch andere Möglichkeiten der Dunkelfeldbeleuchtung möglich wie zum Beispiel durch einen oder mehrere Lichtwellenleiter mit vorgesetzter Optik, welche unter einem flachen Winkel zu der Probenoberfläche ausgerichtet sind.

Bei der zuvor beschriebenen Art der automatisierten Inspektion liegt eine zweidimensionale Bildinformation vor, d.h., es kann zunächst nicht bei der Detektion einer Kante (z.B. einer Kante eines Defektes) unterschieden werden, ob eine Erhebung (Grat) oder eine Vertiefung (Loch) vorliegt. In einige Anwendungsfällen ist diese Unterscheidung jedoch zwingend erforderlich, um zwischen einer tolerierbaren und einer nichttolerierbaren Abweichung zu unterscheiden.

In einer weiteren vorteilhaften Art der Ausführung der erfindungsgemäßen Vorrichtung wird daher das im Rahmen der zweidimensionalen optischen Inspektion detektierte Ringsegment des Stents einem topographischen Sensor (z.B. einem Konfokal-Sensor, einem Interferometer, etc.) zugeführt. Durch die selektive Abtastung der Probenoberfläche im Bereich der zuvor im zweidimensionalen Bild detektierten Abweichung ergibt sich ein Signal, aus welchem die benötigte Höheninformation gewonnen werden kann. Der Vorteil der hier beschriebenen Kombination von Messverfahren liegt in der eingeschränkten Benutzung des hochgenauen und somit zeitaufwendigen Topographie-Sensors in einem zuvor mit Hilfe der schnellen 2-dimensionalen optischen Messung vorselektiertem Bereich der Probenoberfläche.

Je nach vorliegendem Defekt, z.B. einem Materialrückstand, werden verschiedene Wellenlängenbereiche des zur Beleuchtung verwendeten Lichts unterschiedlich stark reflektiert bzw. absorbiert. Durch Verwendung von Filtern, welche Licht transmittieren, welches bevorzugt von dem vorliegenden Defekt reflektiert oder absorbiert wird, wird bei der optischen Abbildung ein zur Auswertung benötigter Kontrast erreicht.

Zur Ermittlung der Abweichung der Ist- von der Sollstruktur der Stentstege können die zur Herstellung der Stege durch Laserschneiden dienenden CAD-Daten in die Inspektionssoftware eingelesen und im Weiteren als Referenz verwendet. Somit kann die erfindungsgemäße Inspektionsvorrichtung einfach an neue Stentdesigns und -dimensionen angepasst werden, ohne den ansonsten üblichen zusätzlichen Aufwand beim Anlernen der neuen Strukturen zu verursachen.

Die nach dem bisherigen Stand der Technik nicht realisierbare automatisierte Inspektion des Stentinneren wird bei der erfindungsgemäßen Inspektionsvorrichtung 2 durch eine Kombination aus der Halterung des Stents und angepasster abbildender Optik erreicht.

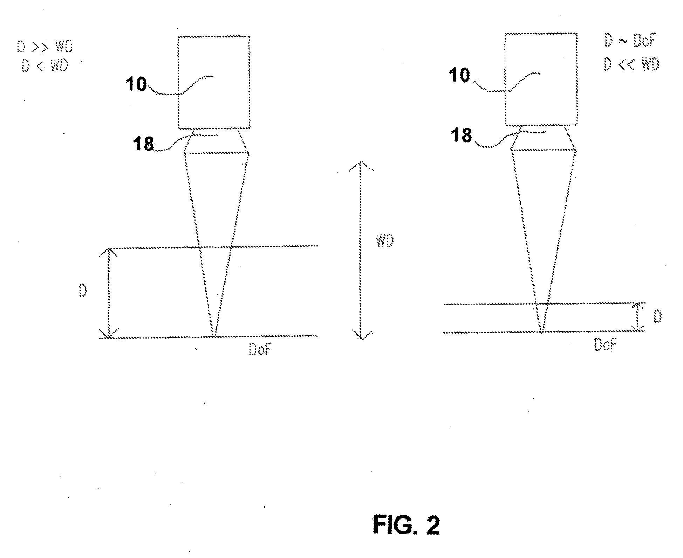

Figur 2 zeigt das Prinzip zur Abbildung der Stentinnenseite. Durch den Einsatz einer Optik bestehend aus einem Mikroskopobjektiv 18 mit Vergrößerung V, numerischer Apertur NA, Arbeitsabstand WD und Tiefenschärfe DoF wird die im linken Teil der Figur dargestellte Situation realisiert. Dabei ist die Tiefenschärfe des Objektivs 18 klein im Vergleich zum Durchmesser des Stents 4, d.h. zum Abstand von Innen- zu Außenseite. Die numerische Apertur des Objektives 18 wird so gewählt bzw. Eingestellt, dass der daraus resultierende Tiefenschärfebereich ausreicht, um die Variationen der Oberfläche (z.B. Höhenschlag) relativ zur Optik abbilden zu können. Gleichzeitig wird der Tiefenschärfebereich so niedrig wie möglich eingestellt, um die bei der Innenseiteninspektion darüber liegenden Stentstrukturen auszublenden (vgl. Fig. 2). Je nach Art und Lage dieser Stentstrukturen werden die Raumfrequenzen, d.h. die Winkelanteile der optischen Abbildung unterschiedlich stark blockiert oder gestreut, was im resultierenden Gesamtbild zu einer Unschärfe führt, die durch die nachfolgende Bildverarbeitung noch ausgeglichen werden kann.

Um eine hohe Qualität der Abbildung der Stentinnenseite zu erreichen, die Voraussetzung für jede Art der automatischen Inspektion ist, ist auch die zuvor angesprochene Halterung der Stents 4 von Bedeutung. Bei dem eingangs genannten Stand der Technik werden die Stents auf Spindeln gesetzt, welche zudem an den jeweiligen Stentdurchmesser angepasst sein müssen. Die Stentinnenseite ist bei dieser Art der Lagerung optisch nicht frei zugänglich, des weiteren ist die automatische Bestückung des Systems nicht einfach zu realisieren.

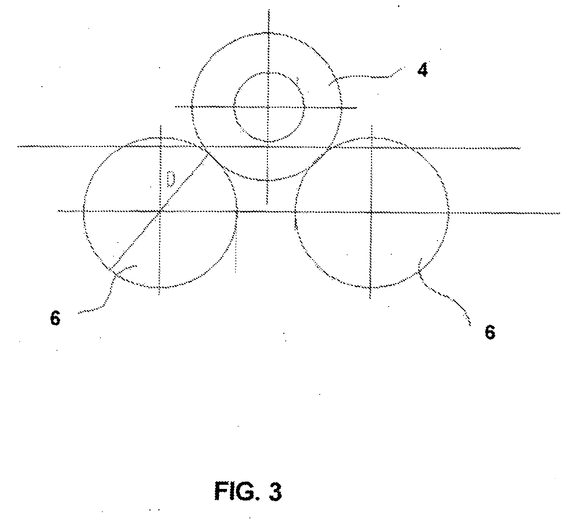

Durch die in Figur 3 dargestellten Halterung der Stents 4 mittels zweier parallel zueinander angeordneten Walzen 6 werden die zur Abbildung der Stentinnenseite optimalen Bedingungen erreicht, d.h., die Halterung beeinflusst dabei weder das zur Beleuchtung verwendete Licht noch die Strahlführung der reflektierten Anteile dieses Lichts. Die Walzendurchmesser D sind möglichst klein bzw. vergleichbar zu den Stentdurchmessern gewählt, im Gegensatz zu den Spindeln nach dem Stand der Technik kann allerdings für alle gängigen Stentdurchmesser ein einziger Walzensatz verwendet werden. Der Abstand der Walzen 6 lässt sich automatisch einstellen und wird an den jeweiligen Stentdurchmesser so angepasst, dass Geometrievariationen des Stents 4 bzw. der Walzen 6 einen minimalen Einfluss auf die Fokusebene der abbildenden Optik haben. Durch diese Ausführung der Stenthalterung und -drehung gelingt es, die Stentinnenseite möglichst weit im Raum oberhalb der Walzen 6 zu lagern.

In einer weiteren vorteilhaften Ausführung der erfindungsgemäßen Vorrichtung werden zur Vermeidung des Schlupfes des Stents 4 relativ zu den Walzen 6 diese durch geeignete Mittel, wie z.B. Beschichtung, Strukturierung, d.h., Aufbringung einer Materialschicht in einer strukturierten Form, z.B. einer Gitterstruktur, etc., mit einem angepassten Reibungskoeffizienten versehen.

In einer weiteren vorteilhaften Ausführung der erfindungsgemäßen Vorrichtung werden zur Vermeidung des Schlupfes des Stents 4 relativ zu den Walzen 6 deren Oberflächen so strukturiert, dass sich zwischen Stent 4 und Walzen 6 ein Formschluss ergibt.

In einer weiteren vorteilhaften Ausführung der erfindungsgemäßen Vorrichtung werden zur Vermeidung des Schlupfes des Stents 4 relativ zu den Walzen 6 diese mit unterschiedlichen Winkelgeschwindigkeiten gedreht.

In noch einer weiteren vorteilhaften Ausführung der der erfindungsgemäßen Vorrichtung werden zur Vermeidung des Schlupfes des Stents 4 relativ zu den Walzen 6 diese so ausgeführt, dass ein von außen ausgelegter Unterdruck die Stents 4 auf der Walzenoberfläche ansaugt.

In noch einer weiteren vorteilhaften Ausführung der der erfindungsgemäßen Vorrichtung wird zur Vermeidung des Schlupfes des Stents 4 relativ zu den Walzen 6 eine Ansaugung von außen verwendet.

## Patentansprüche

1. Vorrichtung (2) zur automatischen Beleuchtung und Inspektion von röhrenförmigen Proben (4), insbesondere Stents, mit drehbaren Mitteln (6) zur Halterung der zu inspizierenden Proben (4), einer elektronischen Kamera (10) mit zugehöriger Optik (18), einem computer-basierten elektronischen Bildverarbeitungssystem, sowie Mitteln (14, 16) zur Beleuchtung der zu inspizierenden Probe (4), wobei die Beleuchtung der Probenoberflächen mittels einer Kombination aus Dunkelfeld- und Durchlichtbeleuchtung erfolgt, **dadurch gekennzeichnet, dass** die Vorrichtung eine zusätzliche Auflichtbeleuchtung zur optischen Hervorhebung von Oberflächendefekten aufweist, die keine ausgeprägten Kantenstrukturen besitzen.

2. Vorrichtung nach Anspruch 1, **dadurch gekennzeichnet, dass** die zusätzliche Auflichtbeleuchtung als koaxiale Beleuchtung ausführbar ist.

3. Vorrichtung nach Anspruch 1, **dadurch gekennzeichnet, dass** die zusätzliche Auflichtbeleuchtung als Ringlicht ausgebildet ist.

4. Vorrichtung nach einem der Ansprüche 1 bis 3, **dadurch gekennzeichnet, dass** die elektronische Kamera ausgewählt ist aus der Gruppe bestehend aus Zeilenkamera, CCD-Kamera und Matrix-Kamera.

5. Vorrichtung nach einem der vorstehenden Ansprüche, **dadurch gekennzeichnet, dass** die Dunkelfeldbeleuchtung mittels eines Ringlichts (14) erfolgt.

6. Vorrichtung nach einem der vorstehenden Ansprüche, **dadurch gekennzeichnet, dass** die drehbaren Mittel (6) zur Halterung der zu inspizierenden Probe (4) aus zwei parallel zueinander angeordneten Walzen (6) bestehen.

7. Vorrichtung nach Anspruch 6, **dadurch gekennzeichnet, dass** die Durchlichtbeleuchtung durch eine der Kamera (10) gegenüber liegend unterhalb der Walzen (6) angeordnete Durchlichteinheit (16) erfolgt.

8. Vorrichtung nach Anspruch 7, **dadurch gekennzeichnet, dass** die Durchlichteinheit (16) aus einer Lichtplatte besteht.

9. Vorrichtung nach Anspruch 7, **dadurch gekennzeichnet, dass** die Durchlichteinheit (16) aus einem Lichtwellenleiter mit vorgesetzter Optik besteht.

10. Vorrichtung nach Anspruch 6, **dadurch gekennzeichnet, dass** die Walzen (6) so angeordnet sind, dass die Probeninnenseite möglichst weit im Raum oberhalb der Walzen liegt.

11. Vorrichtung nach Anspruch 6, **dadurch gekennzeichnet, dass** der Abstand der Walzen (6) frei wählbar ist.

12. Vorrichtung nach Anspruch 6, **dadurch gekennzeichnet, dass** die Durchmesser der Walzen (6) vergleichbar dem Durchmesser der Probe (4) wählbar ist.

13. Vorrichtung nach einem der Ansprüche 6 bis 12, **dadurch gekennzeichnet, dass** zur Vermeidung des Schlupfes der Probe (4) relativ zu den Walzen (6) die Walzen (6) einen bestimmten Reibungskoeffizienten aufweisen.

14. Vorrichtung nach einem der Ansprüche 6 bis 13, **dadurch gekennzeichnet, dass** zur Vermeidung des Schlupfes der Probe (4) relativ zu den Walzen (6) die Walzen mit unterschiedlichen Winkelgeschwindigkeiten drehbar sind.

15. Vorrichtung nach einem der Ansprüche 6 bis 13, **dadurch gekennzeichnet, dass** zur Vermeidung des Schlupfes der Probe (4) relativ zu den Walzen (6) die Probe (4) durch einen Unterdruck auf der Walzenoberfläche ansaugbar ist.

16. Vorrichtung nach einem der Ansprüche 6 bis 13, **dadurch gekennzeichnet, dass** zur Vermeidung des Schlupfes der Probe (4) relativ zu den Walzen (6) eine Ansaugung von außen verwendbar ist.

17. Vorrichtung nach einem der Ansprüche 6 bis 13, **dadurch gekennzeichnet, dass** zur Vermeidung des Schlupfes der Probe (4) relativ zu den Walzen (6) deren Oberflächen so strukturiert sind, dass sich zwischen Probe (4) und Walzen (6) ein Formschluss ergibt.

18. Vorrichtung nach einem der Ansprüche 1 bis 5, **dadurch gekennzeichnet, dass** die drehbaren Mittel (6) zur Halterung der zu inspizierenden Probe (4) die zu inspizierende röhrenförmige Probe innen an deren Stirnseiten greifen.

19. Vorrichtung nach einem der Ansprüche 1 bis 5, **dadurch gekennzeichnet, dass** die drehbaren Mittel (6) zur Halterung der zu inspizierenden Probe (4) die zu inspizierende röhrenförmige Probe außen an deren Stirnseiten greifen.

20. Vorrichtung nach Anspruch 18 oder 19, **dadurch gekennzeichnet, dass** die zu inspizierende Probe (4) durch die drehbaren Mittel (6) diskontinuierlich greifbar ist.

21. Vorrichtung nach einem der vorstehenden Ansprüche, **dadurch gekennzeichnet, dass** die Probenkonturen und eventuell vorhandene Defekte der Probenoberfläche automatisch erkenn- und auswertbar sind.

22. Vorrichtung nach einem der vorstehenden Ansprüche, **dadurch gekennzeichnet, dass** zur Beleuchtung der Probe (4) unterschiedliche Wellenlängen verwendbar sind.

23. Vorrichtung nach einem der vorstehenden Ansprüche, **dadurch gekennzeichnet, dass** zur Ermittlung der Abweichung der Istvon der Sollstruktur der Probe (4) die zur Herstellung der Probenstruktur dienenden CAD-Daten in die Inspektionssoftware des computer-basierten elektronischen Bildverarbeitungssystems einlesbar sind.

24. Vorrichtung nach einem der vorstehenden Ansprüche, **dadurch gekennzeichnet, dass** die Tiefenschärfe einer Optik (18) klein ist im Verhältnis zum Durchmesser der Probe (4).

25. Vorrichtung nach einem der vorstehenden Ansprüche, **dadurch gekennzeichnet, dass** sie zusätzlich ein Autofokussystem aufweist.

26. Vorrichtung nach einem der vorstehenden Ansprüche, **dadurch gekennzeichnet, dass** die Optik (18) der Kamera (10) relativ zu den zu inspizierenden Flächen der Probe (4) positionierbar ist.

27. Vorrichtung nach einem der vorstehenden Ansprüche, **dadurch gekennzeichnet, dass** eine Mehrzahl von parallel angeordneten optischen Anordnungen verwendbar ist.

28. Vorrichtung nach einem der vorstehenden Ansprüche, **dadurch gekennzeichnet, dass** sie zusätzlich einen Topographie-Sensor zur Unterscheidung und Vermessung von Erhebungen und Vertiefungen der Oberfläche der Probe (4) aufweist.

29. Vorrichtung nach einem der vorstehenden Ansprüche, **dadurch gekennzeichnet, dass** sie zusätzlich einen Schichtdicken-Sensor zur Unterscheidung und Vermessung von Schichtdicken aufweist.

30. Vorrichtung nach einem der vorstehenden Ansprüche, **dadurch gekennzeichnet, dass** die zu inspizierenden Proben (4) eine Beschichtung aufweisen.

31. Verfahren zur automatischen Beleuchtung und Inspektion von röhrenförmigen Proben (4), insbesondere Stents, mit einer Vorrichtung nach einem der Ansprüche 1 bis 30, wobei die Beleuchtung der Probenoberflächen mittels einer Kombination aus gleichzeitiger Dunkelfeld- und Durchlichtbeleuchtung erfolgt, **dadurch gekennzeichnet, dass** eine zusätzliche Auflichtbeleuchtung zur optischen Hervorhebung von Oberflächendefekten, die keine ausgeprägte Kantenstrukturen besitzen, verwendet wird.

32. Verfahren nach Anspruch 31, **dadurch gekennzeichnet, dass** die zusätzliche Auflichtbeleuchtung als koaxiale Beleuchtung ausgeführt wird.

33. Verfahren nach Anspruch 31, **dadurch gekennzeichnet, dass** die zusätzliche Auflichtbeleuchtung als Ringlicht ausgeführt wird.

34. Verfahren nach Anspruch 31, **dadurch gekennzeichnet, dass** die Dunkelfeldbeleuchtung mittels eines Ringlichts (14) erfolgt.

35. Verfahren nach einem der Ansprüche 31 bis 34, **dadurch gekennzeichnet, dass** die Durchlichtbeleuchtung durch eine der Kamera (10) gegenüber liegend unterhalb zweier parallel zueinander angeordneten, zur Halterung der zu inspizierenden Probe dienenden Walzen (6) angeordnete Durchlichteinheit (16) erfolgt.

36. Verfahren nach einem der Ansprüche 31 bis 35, **dadurch gekennzeichnet, dass** zur Vermeidung des Schlupfes der Probe (4) relativ zu den Walzen (6) die Walzen mit unterschiedlichen Winkelgeschwindigkeiten drehbar sind.

37. Verfahren nach einem der Ansprüche 31 bis 36, **dadurch gekennzeichnet, dass** zur Vermeidung des Schlupfes der Probe (4) relativ zu den Walzen (6) die Probe (4) durch einen Unterdruck auf der Walzenoberfläche angesaugt wird.

38. Verfahren nach einem der Ansprüche 31 bis 37, **dadurch gekennzeichnet, dass** die drehbaren Mittel (6) zur Halterung der zu inspizierenden Probe (4) die zu inspizierende röhrenförmige Probe innen an deren Stirnseiten angreifen.

39. Verfahren nach einem der Ansprüche 31 bis 37, **dadurch gekennzeichnet, dass** die drehbaren Mittel (6) zur Halterung der zu inspizierenden Probe (4) die zu inspizierende röhrenförmige Probe außen an deren Stirnseiten angreifen.

40. Verfahren nach einem der Ansprüche 31 bis 39, **dadurch gekennzeichnet, dass** die Probenkonturen und eventuell vorhandene Defekte der Probenoberfläche automatisch erkannt und ausgewertet werden.

41. Verfahren nach einem der Ansprüche 31 bis 40, **dadurch gekennzeichnet, dass** zur Beleuchtung der Probe (4) unterschiedliche Wellenlängen verwendet werden können.

42. Verfahren nach einem der Ansprüche 31 bis 41, **dadurch gekennzeichnet, dass** zur Ermittlung der Abweichung der Istvon der Sollstruktur der Probe (4) die zur Herstellung der Probenstruktur dienenden CAD-Daten in die Inspektionssoftware des computer-basierten elektronischen Bildverarbeitungssystems eingelesen werden.

43. Verfahren nach einem der Ansprüche 31 bis 42, **dadurch gekennzeichnet, dass** eine Mehrzahl von parallel angeordneten optischen Anordnungen verwendet werden kann.

## Claims

1. A device (2) for the automatic illumination and inspection of tubular samples (4), especially stents, comprising:
rotatable means (6) for holding the samples (4) to be inspected;
an electronic camera (10) with an associated lens system (18);
a computer-based electronic image-processing system; and
means (14, 16) for illuminating the tubular sample (4) to be inspected;
whereby the illumination of the surfaces of the tubular sample is effected by a combination of dark-field illumination and transmittent illumination, **characterized in that** the device further comprises an additional incident illumination for optically emphasizing surface defects which have no pronounced edge structures.

2. The device according to claim 1, **characterized in that** the additional incident illumination is implementable as coaxial illumination.

3. The device according to claim 1, **characterized in that** the additional incident illumination is provided by a ring light.

4. The device according to any one of claims 1 to 3, **characterized in that** the electronic camera is selected from the group consisting of a linear array camera, a CCD camera and a matrix camera.

5. The device according to any one of the preceding claims, **characterized in that** the dark-field illumination is provided by a ring-light (14).

6. The device according to any one of the preceding claims, **characterized in that** the rotatable means (6) for holding the sample (4) to be inspected comprises two parallel rollers (6).

7. The device according to claim 6, **characterized in that** the transmittent illumination is provided by a transillumination unit (16), said transillumination unit being set up facing the camera (10) underneath the rollers (6).

8. The device according to claim 7, **characterized in that** the transillumination unit (16) consists of an electroluminescent panel.

9. The device according to claim 7, **characterized in that** the transillumination unit (16) comprises an optical waveguide with a front mounted lens system.

10. The device according to claim 6, **characterized in that** the rollers (6) are arranged such that the inside surface of the sample is at a highest possible point in space above the rollers.

11. The device according to claim 6, **characterized in that** the gap between the rollers (6) is freely selectable.

12. The device according to claim 6, **characterized in that** the diameter of the rollers (6) is selectable comparable to the diameter of the sample (4).

13. The device according to any one of claims 6 to 12, **characterized in that** the rollers (6) have a predetermined coefficient of friction to avoid slippage between the sample (4) and the rollers (6).

14. The device according to any one of claims 6 to 13, **characterized in that** the rollers (6) are rotatable at different angular velocities to avoid slippage between the sample (4) and the rollers (6).

15. The device according to any one of claims 6 to 13, **characterized in that** the sample (4) is suckable by a negative pressure onto the surface of the rollers to avoid slippage between the sample (4) and the rollers (6).

16. The device according to any one of claims 6 to 13, **characterized in that** external suction is utilizable to avoid slippage between the sample (4) and the rollers (6).

17. The device according to any one of claims 6 to 13, **characterized in that** the surfaces of the rollers (6) are structured such that a tight fit is established between the sample (4) and the rollers (6) to avoid slippage between the sample (4) and the rollers (6).

18. The device according to any one of claims 1 to 5, **characterized in that** the rotatable means (6) for holding the sample (4) to be inspected grip the tubular sample to be inspected interiorly at their front ends.

19. The device according to any one of claims 1 to 5, **characterized in that** the rotatable means (6) for holding the sample (4) to be inspected grip the tubular sample to be inspected exteriorly at their front ends.

20. The device according to claims 18 or 19, **characterized in that** the sample (4) to be inspected is grippable discontinuously by the rotatable means (6).

21. The device according to any one of the preceding claims, **characterized in that** contours of the sample and any existing defects of the sample surface are automatically detectable and evaluatable.

22. The device according to any one of the preceding claims, **characterized in that** different wavelengths are usable to illuminate the sample (4).

23. The device according to any one of the preceding claims, **characterized in that** the CAD data for manufacturing the structure of the sample is read into the inspection software of the computer-based electronic image-processing system sample to determine a deviation between an actual and a nominal structure of the sample (4).

24. The device according to any one of the preceding claims, **characterized in that** the focus depth of the lens system (18) is small in relation to the diameter of the sample (4).

25. The device according to any one of the preceding claims, further comprising an auto-focus system.

26. The device according to any one of the preceding claims, **characterized in that** the lens system (18) of the camera (10) is positionable relative to the surfaces of the sample to be inspected.

27. The device according to any one of the preceding claims, **characterized in that** a plurality of optical arrangements, being arranged parallel to each other, are usable.

28. The device according to any one of the preceding claims, **characterized in that** it additionally comprises a topography sensor for differentiating between elevations and depressions and for measuring of elevations and depressions of the surface of the sample (4).

29. The device according to any one of the preceding claims, **characterized in that** it additionally comprises a layer thickness sensor for differentiating between layer thicknesses and for measuring the layer thicknesses.

30. The device according to any one of the preceding claims, **characterized in that** the samples (4) to be inspected have a coating.

31. A method for the automatic illumination and inspection of tubular samples (4), especially stents, comprising a device according to any one of claims 1 to 30, whereby the illumination of the surfaces of the samples is effected by a combination of dark-field illumination and transmittent illumination, **characterized in that** an additional incident illumination is used for optically emphasizing surface defects which have no pronounced edge structures.

32. The method according to claim 31, **characterized in that** the additional incident illumination is implemented as coaxial illumination.

33. The method according to claim 31, **characterized in that** the additional incident illumination is implemented by a ring light.

34. The method according to claim 31, **characterized in that** the dark-field illumination is provided by a ring-light (14).

35. The method according to any one of claims 31 to 34, **characterized in that** the transmittent illumination is provided by a transillumination unit (16), said transillumination unit being set up facing the camera (10) underneath two parallel rollers (6) being arranged parallel to each other and provided for holding the sample to be inspected.

36. The method according to any one of claims 31 to 35, **characterized in that** the rollers are rotatable at different angular velocities to avoid slippage between the sample (4) and the rollers (6).

37. The method according to any one of claims 31 to 36, **characterized in that** the sample (4) is sucked by a negative pressure onto the surface of the rollers to avoid slippage between the sample (4) and the rollers (6).

38. The method according to any one of claims 31 to 37, **characterized in that** the rotatable means (6) for holding the sample (4) to be inspected grip the tubular sample to be inspected interiorly at their front ends.

39. The method according to any one of claims 31 to 37, **characterized in that** the rotatable means (6) for holding the sample (4) to be inspected grip the tubular sample to be inspected exteriorly at their front ends.

40. The method according to any one of claims 31 to 39, **characterized in that** contours of the sample and any existing defects of the sample surface are automatically detected and evaluated.

41. The method according to any one of claims 31 to 40, **characterized in that** different wavelengths can be used to illuminate the sample (4).

42. The method according to any one of claims 31 to 41, **characterized in that** CAD data used for manufacturing the structure of the sample is read into the inspection software of the computer-based electronic image-processing system for determining a deviation between an actual and a nominal structure of the sample (4).

43. The method according to any one of claims 31 to 42, **characterized in that** a plurality of optical arrangements, being arranged parallel to each other, can be used.

## Revendications

1. Dispositif (2) pour l'éclairage automatique et l'inspection d'échantillons de forme tubulaire (4), notamment des stents, avec des moyens tournants (6) pour tenir l'échantillon à inspecter (4), une caméra électronique (10) avec l'optique correspondante (18), un système de traitement d'images électronique basé sur un ordinateur, ainsi que des moyens (14, 16) pour l'éclairage de l'échantillon à inspecter (4), l'éclairage de la surface de l'échantillon étant réalisée au moyen d'une combinaison d'éclairage sur fond obscur et d'éclairage par transparence, **caractérisé en ce que** le dispositif est muni d'un éclairage supplémentaire pour l'accentuation optique de défauts de surface qui ne présentent pas de structures d'arêtes prononcées.

2. Dispositif selon la revendication 1, **caractérisé en ce que** l'éclairage supplémentaire est réalisable sous la forme d'un éclairage coaxial.

3. Dispositif selon la revendication 1, **caractérisé en ce que** l'éclairage supplémentaire a la forme d'une lumière annulaire.

4. Dispositif selon l'une des revendications 1 à 3, **caractérisé en ce que** la caméra est choisie dans le groupe constitué d'une caméra linéaire, d'une caméra CCD et d'une caméra matricielle.

5. Dispositif selon l'une des revendications précédentes, **caractérisé en ce que** l'éclairage sur fond obscur est réalisé au moyen d'une lumière annulaire (14).

6. Dispositif selon l'une des revendications précédentes, **caractérisé en ce que** les moyens tournants (6) pour tenir l'échantillon à inspecter (4) se composent de deux rouleaux (6) disposés parallèlement l'un à l'autre.

7. Dispositif selon la revendication 6, **caractérisé en ce que** l'éclairage par transparence est réalisé par une unité de lumière transmise (16) disposée en dessous des rouleaux (6) en face de la caméra (10).

8. Dispositif selon la revendication 7, **caractérisé en ce que** l'unité de lumière transmise (16) est constituée d'une plaque lumineuse.

9. Dispositif selon la revendication 7, **caractérisé en ce que** l'unité de lumière transmise (16) est constituée par une fibre optique munie d'une optique placée devant.

10. Dispositif selon la revendication 6, **caractérisé en ce que** les rouleaux (6) sont disposés de telle sorte que la face interne de l'échantillon est située aussi loin que possible dans l'espace au-dessus des rouleaux.

11. Dispositif selon la revendication 6, **caractérisé en ce que** la distance entre les rouleaux (6) peut être choisie librement.

12. Dispositif selon la revendication 6, **caractérisé en ce que** le diamètre des rouleaux (6) peut être choisi comparable au diamètre de l'échantillon (4).

13. Dispositif selon l'une des revendications 6 à 12, **caractérisé en ce que** pour éviter que l'échantillon (4) ne patine par rapport aux rouleaux (6), lesdits rouleaux (6) présentent un certain coefficient de frottement.

14. Dispositif selon l'une des revendications 6 à 13, **caractérisé en ce que** pour éviter que l'échantillon (4) ne patine par rapport aux rouleaux (6), lesdits rouleaux peuvent tourner avec des vitesses angulaires différentes.

15. Dispositif selon l'une des revendications 6 à 13, **caractérisé en ce que** pour éviter que l'échantillon (4) ne patine par rapport aux rouleaux (6), l'échantillon (4) peut être aspiré sur la surface des rouleaux par une sous-pression.

16. Dispositif selon l'une des revendications 6 à 13, **caractérisé en ce que** pour éviter que l'échantillon (4) ne patine par rapport aux rouleaux (6), on peut utiliser une aspiration de l'extérieur.

17. Dispositif selon l'une des revendications 6 à 13, **caractérisé en ce que** pour éviter que l'échantillon (4) ne patine par rapport aux rouleaux (6), leur surface est structurée de telle sorte qu'il se crée un emboîtement entre l'échantillon (4) et les rouleaux (6).

18. Dispositif selon l'une des revendications 1 à 5, **caractérisé en ce que** les moyens tournants (6) pour tenir l'échantillon (4) à inspecter saisissent l'échantillon à inspecter de forme tubulaire par l'intérieur au niveau de ses faces frontales.

19. Dispositif selon l'une des revendications 1 à 5, **caractérisé en ce que** les moyens tournants (6) pour tenir l'échantillon (4) à inspecter saisissent l'échantillon à inspecter de forme tubulaire par l'extérieur au niveau de ses faces frontales.

20. Dispositif selon l'une des revendications 18 ou 19, **caractérisé en ce que** l'échantillon à inspecter (4) peut être saisi de façon discontinue par les moyens tournants (6).

21. Dispositif selon l'une des revendications précédentes, **caractérisé en ce que** les contours de l'échantillon et les éventuels défauts de la surface de l'échantillon sont reconnus et exploités automatiquement.

22. Dispositif selon l'une des revendications précédentes, **caractérisé en ce que** différentes longueurs d'onde peuvent être utilisées pour l'éclairage de l'échantillon (4).

23. Dispositif selon l'une des revendications précédentes, **caractérisé en ce que** pour déterminer l'écart entre la structure réelle de l'échantillon et la structure théorique, les données de DAO servant à réaliser la structure de l'échantillon peuvent être lues dans le logiciel d'inspection du système de traitement d'images électronique basé sur un ordinateur.

24. Dispositif selon l'une des revendications précédentes, **caractérisé en ce que** la profondeur de champ d'une optique (18) est petite par rapport au diamètre de l'échantillon (4).

25. Dispositif selon l'une des revendications précédentes, **caractérisé en ce qu'**il dispose en outre d'un système d'autofocus.

26. Dispositif selon l'une des revendications précédentes, **caractérisé en ce que** l'optique (18) de la caméra (10) peut être positionnée par rapport à la surface à inspecter de l'échantillon (4).

27. Dispositif selon l'une des revendications précédentes, **caractérisé en ce qu'**une pluralité de dispositifs optiques disposés parallèlement peut être utilisée.

28. Dispositif selon l'une des revendications précédentes, **caractérisé en ce qu'**il dispose en outre d'un capteur topographique pour distinguer et mesurer des élévations et des renfoncements de la surface de l'échantillon (4).

29. Dispositif selon l'une des revendications précédentes, **caractérisé en ce qu'**il dispose en outre d'un détecteur d'épaisseur de couche pour distinguer et mesurer des épaisseurs de couche.

30. Dispositif selon l'une des revendications précédentes, **caractérisé en ce que** l'échantillon à inspecter (4) présente un revêtement.

31. Procédé pour l'inspection et l'éclairage automatique d'échantillons (4) de forme tubulaire, notamment de stents, avec un dispositif selon l'une des revendications 1 à 30, l'éclairage de la surface de l'échantillon étant réalisée au moyen d'une combinaison simultanée d'éclairage sur fond obscur et d'éclairage par transparence, **caractérisé en ce qu'**un éclairage supplémentaire est utilisé pour l'accentuation optique de défauts de surface qui ne présentent pas de structures d'arêtes prononcées.

32. Procédé selon la revendication 31, **caractérisé en ce que** l'éclairage supplémentaire est réalisé sous la forme d'un éclairage coaxial.

33. Procédé selon la revendication 31, **caractérisé en ce que** l'éclairage supplémentaire a la forme d'une lumière annulaire.

34. Procédé selon la revendication 31, **caractérisé en ce que** l'éclairage sur fond obscur est réalisé au moyen d'une lumière annulaire (14).

35. Procédé selon l'une des revendications 31 à 34, **caractérisé en ce que** l'éclairage par transparence est réalisé par une unité de lumière transmise (16) disposée en face de la caméra (10) en dessous de deux rouleaux (6) parallèles entre eux et servant de support à l'échantillon à inspecter.

36. Procédé selon l'une des revendications 31 à 35, **caractérisé en ce que** pour éviter que l'échantillon (4) ne patine par rapport aux rouleaux (6), lesdits rouleaux peuvent tourner avec des vitesses angulaires différentes.

37. Procédé selon l'une des revendications 31 à 36, **caractérisé en ce que** pour éviter que l'échantillon (4) ne patine par rapport aux rouleaux (6), l'échantillon (4) est aspiré sur la surface des rouleaux par une sous-pression.

38. Procédé selon l'une des revendications 31 à 37, **caractérisé en ce que** les moyens tournants (6) pour tenir l'échantillon (4) à inspecter saisissent l'échantillon à inspecter de forme tubulaire par l'intérieur au niveau de ses faces frontales.

39. Procédé selon l'une des revendications 31 à 37, **caractérisé en ce que** les moyens tournants (6) pour tenir l'échantillon (4) à inspecter saisissent l'échantillon à inspecter de forme tubulaire par l'extérieur au niveau de ses faces frontales.

40. Procédé selon l'une des revendications 31 à 39, **caractérisé en ce que** les contours de l'échantillon et les éventuels défauts de la surface de l'échantillon sont reconnus et exploités automatiquement.

41. Procédé selon l'une des revendications 31 à 40, **caractérisé en ce que** différentes longueurs d'onde peuvent être utilisées pour l'éclairage de l'échantillon (4).

42. Procédé selon l'une des revendications 31 à 41, **caractérisé en ce que** pour déterminer l'écart entre la structure réelle de l'échantillon et la structure théorique, les données de DAO servant à réaliser la structure de l'échantillon sont lues dans le logiciel d'inspection du système de traitement d'images électronique basé sur un ordinateur.

43. Procédé selon l'une des revendications 31 à 42, **caractérisé en ce qu'**une pluralité de dispositifs optiques disposés parallèlement peut être utilisée.
